(19) Europäisches Patentamt / European Patent Office / Office européen des brevets

(11) **EP 1 153 366 B1**

(12) **EUROPEAN PATENT SPECIFICATION**

(45) Date of publication and mention of the grant of the patent:
**25.04.2007 Bulletin 2007/17**

(51) Int Cl.:
**G06T 7/40** (2006.01)

(21) Application number: **00904102.1**

(22) Date of filing: **03.02.2000**

(86) International application number:
**PCT/KR2000/000089**

(87) International publication number:
**WO 2000/046748 (10.08.2000 Gazette 2000/32)**

(54) **COLOR IMAGE PROCESSING METHOD AND APPARATUS THEREOF**

VERFAHREN UND VORRICHTUNG ZUR BEARBEITUNG VON FARBBILDERN

PROCEDE ET DISPOSITIF DE TRAITEMENT D'UNE IMAGE COULEUR

(84) Designated Contracting States:
**AT BE CH CY DE DK ES FI FR GB GR IE IT LI LU MC NL PT SE**

(30) Priority: **05.02.1999 US 118742 P**

(43) Date of publication of application:
**14.11.2001 Bulletin 2001/46**

(60) Divisional application:
**03022071.9 / 1 420 364**

(73) Proprietors:
• **SAMSUNG ELECTRONICS CO., LTD.**
**Suwon City, Kyungki-do 442-373 (KR)**
• **The Regents of the University**
**of California**
**Oakland, CA 94607-5200 (US)**

(72) Inventors:
• **SHIN, Hyun Doo**
**Sungnam-city,**
**Kyungki-do 463-500 (KR)**
• **CHOI, Yang Lim**
**Paldal-gu,**
**Kyungki-do 442-190 (KR)**
• **DENG, Yining**
**Santa Barbara, CA 93106-9560 (US)**
• **MANJUNATH, B.S.**
**Santa Barbara, CA 93106-9560 (US)**

(74) Representative: **Geary, Stuart Lloyd et al**
**Venner Shipley LLP**
**20 Little Britain**
**London EC1A 7DH (GB)**

(56) References cited:

JP-A- 5 266 091     JP-A- 6 318 256
JP-A- 11 238 077     KR-A- 9 822 999
US-A- 5 047 842

• SCHARCANSKI J ET AL: "COLOUR QUANTISATION FOR COLOUR TEXTURE ANALYSIS" IEE PROCEEDINGS E. COMPUTERS & DIGITAL TECHNIQUES, INSTITUTION OF ELECTRICAL ENGINEERS. STEVENAGE, GB, vol. 140, no. 2, 1 March 1993 (1993-03-01), pages 109-114, XP000359610 ISSN: 1350-2387
• PHANENDRA BABU G ET AL: "COLOR INDEXING FOR EFFICIENT IMAGE RETRIEVAL" MULTIMEDIA TOOLS AND APPLICATIONS, KLUWER ACADEMIC PUBLISHERS, BOSTON, US, vol. 1, no. 4, 1 November 1995 (1995-11-01), pages 327-348, XP000563569 ISSN: 1380-7501
• BERGEAUD F ET AL: "Matching pursuit of images" PROCEEDINGS OF THE INTERNATIONAL CONFERENCE ON IMAGE PROCESSING. (ICIP). WASHINGTON, OCT. 23 - 26, 1995, LOS ALAMITOS, IEEE COMP. SOC. PRESS, US, vol. 3, 23 October 1995 (1995-10-23), pages 53-56, XP010196922 ISBN: 0-7803-3122-2
• Acoustics, Speech and Signal Processing, 1999, ICASSP-96. Conference Proceedings, 1996 IEEE International Conference on Published: 1999 pages 167-173, ARDIZZONI S., BARTOLINI I., PATELLA M., "Windsurf: region-based image retrieval using wavelets", XP002950639
• Acoustics, Speech and Signal Processing, 1999, Proceedings, 1999 IEEE International Conference on Published: 1999, Volume 6, pages 3017-3020, Vol. 6, YINING DENG, MANJUNATH B.S., "An efficient low-dimensional color indexing scheme for region-based image retrieval", XP001062245

**Description**

The present invention relates to a colour image processing method and apparatus, and more particularly, to a colour image processing method for retrieving a colour feature descriptor used in indexing and searching a colour image.

Among visual features for describing multi-media contents, colour is the most dominant feature. According to conventional colour image processing methods, a colour histogram is used for expressing the colour information of an image. However, the conventional colour image processing methods using a colour histogram consisting of 1024 bins have drawbacks in that the computational complexity of image processing steps for describing an image is high and much processing time is required.

A colour quantization technique that identifies dominant colours is disclosed in Scharcanski, J. *et al.*, "Colour quantisation for colour texture analysis", 8049e IEE Proceedings-E, 140(1993)March, No. 2, Stevenage, Herts., GB.

The reader is also referred to JP-A-11238077 and Artesian *et al*, "Windsurf: region-based image retrieval using wavelets", Proceedings ICASSP-96, IEEE, 1999, pp. 167-173.

According to the invention, there is provided a method of representing a colour image according to claim 1 of the appended claims.

According to the invention, there is further provided a colour image processing apparatus according to claim 9 of the appended claims.

According to the present invention, there is also provided a computer readable medium having program codes executable by a computer to perform a method according to the present invention.

Additional preferred and optional features are defined in the dependent claims.

The above objects and advantages of the present invention will become more apparent by describing in detail preferred embodiments thereof with reference to the attached drawings in which:

FIG. 1 is a flow diagram showing a colour image processing method according to the present invention;

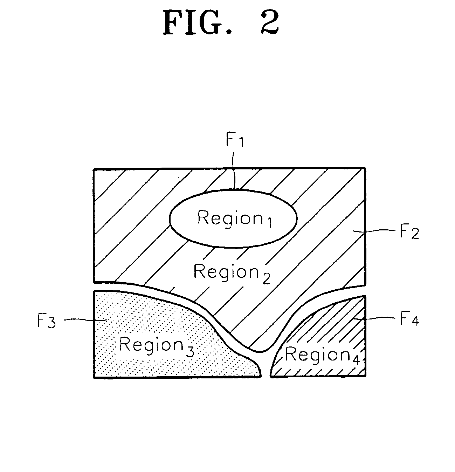

FIG. 2 is a diagram illustrating image segmentation performed in the step 106 of FIG. 1;
FIG. 3 is a block diagram of a colour image processing apparatus according to the present invention; and

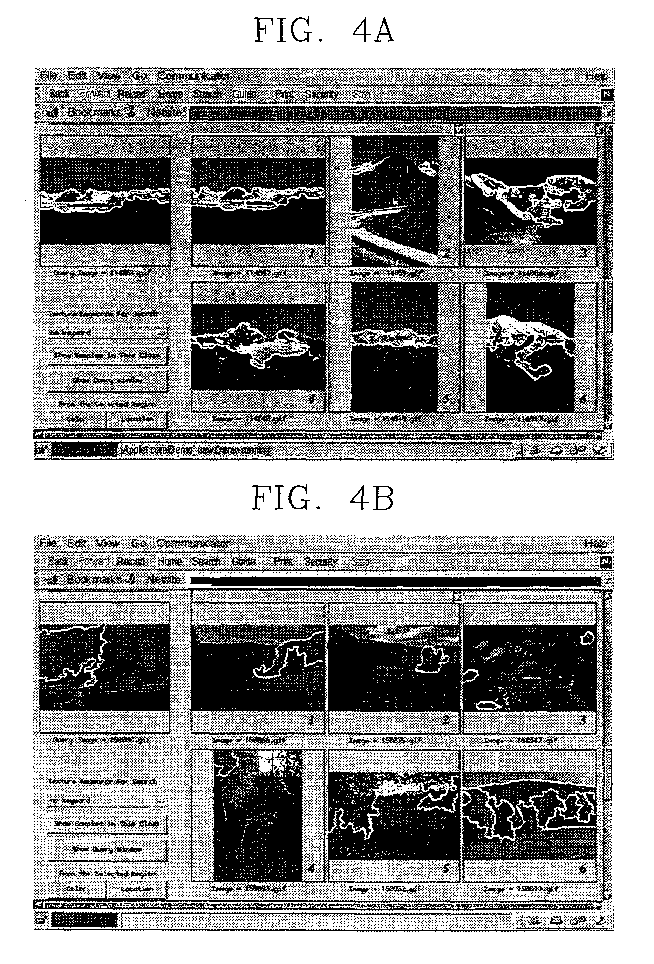

FIGS. 4A and 4B show the result obtained by performing a region-based search with respect to images indexed by a computer program based on the colour image processing method according to the present invention.

Hereinafter, embodiments of the present invention will be described in detail with reference to the accompanying drawings.

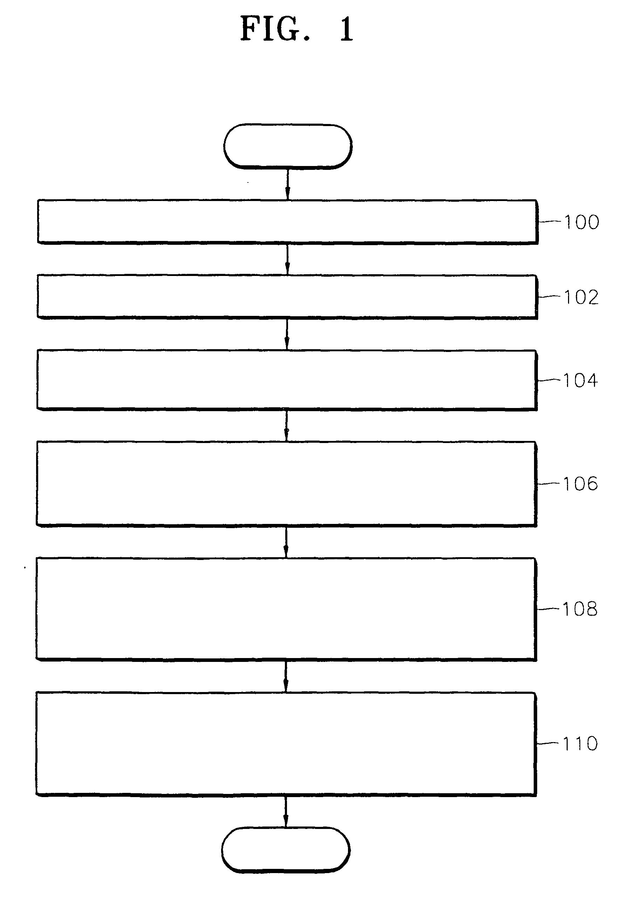

Referring to FIG. 1 illustrating a colour image processing method according to the present invention, a colour image A is input (step 100). The colour image is segmented into a plurality of regions $F_1$, $F_2$, $F_3$ and $F_4$ (step 102). The segmentation can be performed based on edge flow, for example. Then, quantized colour vectors for the respective regions $F_1$, $F_2$, $F_3$ and $F_4$ are obtained (step 104).

The step of obtaining the quantized colour vectors preferably includes the following steps. First, a predetermined filtering step for smoothing and noise removal of an image is performed as a pre-processing step. Next, the probability of pixels in the filtered image being noisy pixels is analyzed to then apply an appropriate weight to the same. The probability of pixels in the filtered image being noisy pixels is obtained by the colour distance from neighboring pixels. For example, i pixels, in which i is an arbitrary integer, ranging from a pixel having the minimum colour distance are selected among the pixels sorted according to the colour distance from a central pixel; and among the selected pixels, the pixel value which has the largest colour distance is set to the maximum colour distance, which is denoted by T(n).

Then, the colour vectors of the respective pixels are weighted by exp(-T(n)). exp(-T(n)) is defined by *v(n)*. Next, assuming that the average of T(n) values of all pixels is Tavg, the number *N* of initial clusters to be used in quantization equals Tavg × an arbitrary constant, e. g., 2. Then, a general Lloyd algorithm is applied to the colour vectors corresponding to weighted pixels to quantize the colour vectors. First, using the cluster centroid ($c_i$) represented by Expression (1):

$$c_i = \frac{\sum v(n)X(n)}{\sum v(n)} \quad \ldots\ldots(1)$$

wherein X (n) is the pixel value of the nth pixel among the sorted pixels, and a value of $D_i$ represented by Expression (2) is calculated:

$$D_i = \sum v(n)\left\|X(n) - c_i\right\|^2 \quad \ldots\ldots(2)$$

to then split a cluster having the largest value of $D_i$. This procedure is repeated until N clusters are generated. After N clusters are generated, a general Lloyd algorithm is performed. When the general Lloyd algorithm is performed, the cluster centroid is calculated by the Expression (1) to perform updating.

Next, clusters having similar colour vectors are agglomerated by performing agglomerative clustering. Agglomerative clustering is disclosed by R. O. Duda and P. E. Hart in "Pattern Classification and Scene Analysis, John Wiley and Sons, New York, 1973," which will not be described in detail in this specification.

Then, the colour vectors are classified and dominant colours represented by colour vectors $[cL_i, cU_i, cV_i]$ and their percentages $P_i$ are obtained (step 106). Here, $i$ denotes the arbitrary serial number of primary regions, ranging from 1 through N, L, U and V denote coordinates of the CIE LUV colour coordinate system. The percentages $P_i$ are expressed by decimals. The sum of the percentages $P_i$ for $i$ regions is 1 as represented by Expression (3):

$$\sum_{i=1}^{N} P_i = 1 \quad \ldots\ldots(3).$$

Next, the dominant colours represented by colour vectors $[cL_i, cU_i, cV_i]$ and their percentages $P_i$ are expressed as the colour feature descriptor of a pertinent region obtained (step 108). In other words, the colour feature descriptor F can be represented by Expression (4):

$$F = \{\{[cL_i, cU_i, cV_i], P_i\}, i = 1, \ldots, N\} \quad \ldots\ldots(4)$$

wherein N is a predetermined positive integer. The colour feature descriptor can be referred to as a variable-bin colour histogram.

By combining pixel value data in the $k$th region, i.e., $Region_k$ and colour feature descriptor data of this region, i.e., $F_k$, the whole image A' is represented by Expression (5):

$$A' = \{Region_1, F_1; Region_2, F_2; \ldots; Region_k, F_k\} \ldots\ldots(5)$$

wherein $k$ is a predetermined positive integer representing the number of segmented regions of the image A (step 110).

The colour feature descriptor retrieved by the colour image processing method according to the present invention is compactly represented by a small number of numbers with respect to one region. The compact representation of the colour feature descriptor can remarkably reduce the computational complexity. This allows fast search and retrieval of multi-media based contents. The colour image processing method according to the present invention can be applied to an object-based image processing method such as MPEG-7.

The colour image processing method is programmable by a computer program.

Codes and code segments constituting the computer program can be easily derived by a computer programmer in the art. Also, the program is stored in computer readable media and is readable and executable by the computer, thereby embodying the colour image processing method. The media include magnetic recording media, optical recording media, carrier wave media, and the like.

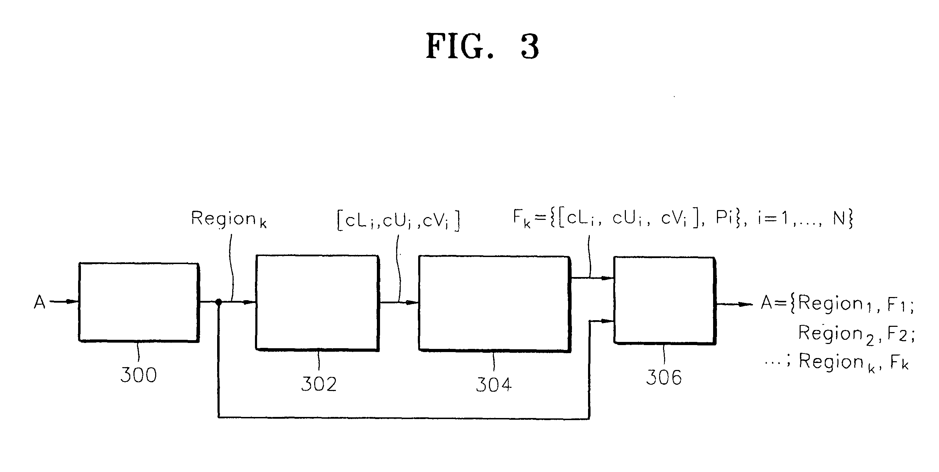

Also, the colour image processing method can be implemented on a colour image processing apparatus. FIG. 3 is a block diagram of a colour image processing apparatus according to the present invention. Referring to FIG. 3, the colour image processing apparatus includes a segmenting unit 300, a colour vector retrieving unit 302, a colour feature descriptor generating unit 304 and a combining unit 306.

In the operation of the colour image processing apparatus, the segmenting unit 300 segments an input image A into $k$ regions and sequentially outputs pixel value data $Region_k$ in the kth region. The colour vector retrieving unit 302 receives the pixel value data $Region_k$ in the $k$th region and retrieves the colour vectors $[cL_i, cU_i, cV_i]$. When $i$ colour vectors $[cL_i, cU_i, cV_i]$ are all received, the colour feature descriptor generating unit 304 obtains the percentages $P_i$ of dominant colours represented by the colour vectors $[cL_i, cU_i, cV_i]$, and generates and outputs colour feature descriptor data $F_k$. The colour feature descriptor data $F$ includes information on the dominant colours represented by the colour vectors $[cL_i, cU_i, cV_i]$ and their percentages $P_i$.

In order to obtain the percentages $P_i$ of the respective colours, it is more preferable that colour quantization is performed within each segmented region. Thus, the color image processing apparatus preferably further includes a quantizing unit (not shown). The color image processing apparatus preferably further includes a filtering unit (not shown) for performing a predetermined filtering process for smoothing and noise removal of the input image. The quantizing unit analyzes the probability of pixels in the filtered image being noisy pixels, applies an appropriate weight thereto and quantizes the color vectors corresponding to the weighted pixels by a general Lloyd algorithm.

The combining unit 306 combines pixel value data in the $k$th region, i.e., $Region_k$ and color feature descriptor data of this region, i.e., $F_k$, to output the processed image $A$'. The color image processing apparatus according to the present invention can be applied to an object-based image processing method such as MPEG-7. Also, in the color image processing apparatus according to the present invention, expressing a color image using dominant colors of the image can also be applied to various other fields besides the field of color image processing.

As described above, the color image processing method according to the present invention is applied to an object-based image processing method, thereby allowing fast search and retrieval of multi-media contents.

Industrial Applicability

The present invention can be applied to the fields of object-based image processing.

**Claims**

1. A method of representing a colour image, the method comprising:

    (a) segmenting an input image into a plurality of regions;
    (b) obtaining colour vectors for the regions;
    (c) classifying the colour vectors to obtain dominant colours of the input image and ratios thereof; and
    (d) representing the dominant colours and the ratios thereof as a colour feature descriptor of the input image.

2. A method according to claim 1, wherein the colour vectors are quantized colour vectors.

3. A method according to claim 1 or 2, wherein the ratios are expressed by decimals, the sum of which is one.

4. A method according to claim 1, 2 or 3, further comprising the step of combining the colour vectors and the colour feature descriptor and representing the whole image with the combination result.

5. A method according to any preceding claim, further comprising the step of performing a predetermined filtering process for smoothing of the input image, before the classification of the colour vectors to obtain the dominant colours of the input image and the ratios thereof.

6. A method according to any preceding claim, further comprising the step of performing a predetermined filtering process for noise removal from the input image, before the classification of the colour vectors to obtain the dominant colours of the input image and the ratios thereof.

7. A method according to any one of the preceding claims, further comprising the steps of:

    analyzing the probability of pixels in the input image being noisy pixels and applying appropriate weights thereto; and
    applying a general Lloyd algorithm to the colour vectors, corresponding to the weighted pixels, to perform colour quantization, before the classification of the colour vectors to obtain the dominant colours of the input image and the ratios thereof.

8. A computer readable medium having program codes executable by a computer to perform a colour image processing method according to any preceding claim.

9. A colour image processing apparatus for retrieving a colour feature descriptor for describing colour features of an image, comprising:

    a segmenting unit for segmenting an input image into k regions, wherein k is an arbitrary positive integer, and sequentially outputting pixel value data corresponding to the kth region;
    a colour vector retrieving unit (302) for receiving the pixel value data and for retrieving colour vectors for a predetermined colour coordinate system; and

a colour feature descriptor generating unit (304) for obtaining the percentage of dominant colours represented by the colour vectors when the colour vectors are all received and generating and outputting colour feature descriptor data containing the information on the dominant colours and the percentages thereof.

**10.** An apparatus according to claim 9, further comprising combining unit (306) for combining pixel value data and colour feature descriptor data to output a processed image.

**11.** An apparatus according to claim 9 or 10, further comprising a combining unit for combining pixel value data corresponding to the kth region and colour feature descriptor data of the corresponding region, with respect to all the k segmented regions, to output a processed image.

**12.** An apparatus according to claim 9, 10 or 11, further comprising a quantizing unit for performing colour quantization in the segmented regions.

**13.** An apparatus according to claim 12, wherein the quantizing unit analyzes the probability of pixels in the filtered image being noisy pixels and applying appropriate weights thereto, and applies a general Lloyd algorithm to the colour vectors corresponding to the weighted pixels to perform colour quantization.

**14.** An apparatus according to any of claims 9 to 13, further comprising a filtering unit for performing a predetermined filtering process for smoothing of the input image.

**15.** An apparatus according to any of claims 9 to 14, further comprising a filtering unit for performing a predetermined filtering process for removal of noise from the input image.

**Patentansprüche**

**1.** Verfahren zum Darstellen eines Farbbildes, wobei das Verfahren umfasst:

(a) Segmentieren eines Eingangsbildes in eine Vielzahl von Bereichen;
(b) Ermitteln von Farbvektoren für die Bereiche;
(c) Klassifizieren der Farbvektoren, um dominante Farben des Eingangsbildes und Verhältnisse derselben zu ermitteln; und
(d) Darstellen der dominanten Farben und der Anteile derselben als eine Farbmerkmalbeschreibung (Coulour Feature Descriptor) des Eingangsbildes.

**2.** Verfahren nach Anspruch 1, wobei die Farbvektoren quantisierte Farbvektoren sind.

**3.** Verfahren nach Anspruch 1 oder 2, wobei die Anteile durch Dezimalzahlen ausgedrückt werden, deren Summe Eins ist.

**4.** Verfahren nach Anspruch 1, 2, oder 3, das des Weiteren den Schritt des Kombinierens der Farbvektoren und der Farbmerkmalbeschreibung sowie des Darstellens des gesamten Bildes mit dem Ergebnis der Kombination umfasst.

**5.** Verfahren nach einem der vorangehenden Ansprüche, das des Weiteren den Schritt des Durchführens eines vorgegebenen Filterprozesses zum Glätten des Eingangsbildes vor der Klassifizierung der Farbvektoren zum Ermitteln der dominanten Farben des Eingangsbildes und der Anteile derselben umfasst.

**6.** Verfahren nach einem der vorangehenden Ansprüche, das des Weiteren den Schritt des Durchführens eines vorgegebenen Filterprozesses zur Entfernung von Rauschen aus dem Eingangsbild vor der Klassifizierung der Farbvektoren zum Ermitteln der dominanten Farben des Eingangsbildes und der Anteile derselben umfasst.

**7.** Verfahren nach einem der vorangehenden Ansprüche, das des Weiteren die folgenden Schritte umfasst:

Analysieren der Wahrscheinlichkeit, dass Pixel in dem Eingangsbild verrauschte Pixel sind, und Anwenden geeigneter Gewichtungen auf diese; und
Anwenden eines generalisierten Lloyd-Algorithmus auf die Farbvektoren entsprechend den gewichteten Pixeln, um Farb-Quantisierungen vor der Klassifizierung der Farbvektoren zum Ermitteln der dominanten Farben des Eingangsbildes und der Anteile derselben durchzuführen.

8. Computerlesbares Medium, das Programmcodes aufweist, die durch einen Computer ausgeführt werden können, um ein Farbbild-Verarbeitungsverfahren nach einem der vorangehenden Ansprüche durchzuführen.

9. Farbbild-Verarbeitungsvorrichtung zum Gewinnen einer Farbmerkmalbeschreibung zum Beschreiben von Farbmerkmalen eines Bildes, die umfasst:

eine Segmentiereinheit zum Segmentieren eines Eingangsbildes in k Bereiche, wobei k eine beliebige positive ganze Zahl ist, und
sequentielles Ausgeben von Pixelwertdaten, die dem k-ten Bereich entsprechen,
eine Farbvektor-Gewinnungseinheit (302) zum Empfangen der Pixelwertdaten und zum Gewinnen von Farbvektoren für ein vorgegebenes Farb-Koordinatensysytem; und
eine Einheit (304) zum Erzeugen einer Farbmerkmalbeschreibung, die den Anteil dominanter Farben ermittelt, die durch die Farbvektoren dargestellt werden, wenn alle Farbvektoren empfangen sind, und Farbmerkmalbeschreibungsdaten erzeugt und ausgibt, die die Informationen über die dominanten Farben und die Anteile derselben enthalten.

10. Vorrichtung nach Anspruch 9, die des Weiteren eine Kombiniereinheit (306) umfasst, die Pixelwertdaten und Farbmerkmalbeschreibungsdaten kombiniert, um ein verarbeitetes Bild auszugeben.

11. Vorrichtung nach Anspruch 9 oder 10, die des Weiteren eine Kombiniereinheit umfasst, die Pixelwertdaten entsprechend dem k-ten Bereich und Farbmerkmalbeschreibungsdaten des entsprechenden Bereiches in Bezug auf alle k segmentierten Bereiche kombiniert, um ein verarbeitetes Bild auszugeben.

12. Vorrichtung nach Anspruch 9, 10 oder 11, die des Weiteren eine Quantisiereinheit zum Durchführen von Farbquantisierung in den segmentierten Bereichen umfasst.

13. Vorrichtung nach Anspruch 12, wobei die Quantisiereinheit die Wahrscheinlichkeit analysiert, dass Pixel in dem gefilterten Bild verrauschte Pixel sind, und geeignete Gewichtungen auf diese anwendet, und einen generalisierten Lloyd-Algorithmus auf die Farbvektoren entsprechend den gewichteten Pixeln anwendet, um Farbquantisierung durchzuführen.

14. Vorrichtung nach einem der Ansprüche 9 bis 13, die des Weiteren eine Filtereinheit zum Durchführen eines vorgegebenen Filterprozesses zum Glätten des Eingangsbildes umfasst.

15. Vorrichtung nach einem der Ansprüche 9 bis 14, die des Weiteren eine Filtereinheit zum Durchführen eines vorgegebenen Filterprozesses zum Entfernen von Rauschen aus dem Eingangsbild umfasst.

**Revendications**

1. Procédé de représentation d'une image couleur, le procédé comportant les étapes consistant à :

(a) segmenter une image d'entrée en une pluralité de régions,
(b) obtenir des vecteurs de couleur pour les régions,
(c) classer les vecteurs de couleur afin d'obtenir des couleurs dominantes de l'image d'entrée et des pourcentages de celles-ci, et
(d) représenter les couleurs dominantes et les pourcentages de celles-ci en tant que descripteur d'attribut de couleur de l'image d'entrée.

2. Procédé selon la revendication 1, dans lequel les vecteurs de couleur sont des vecteurs de couleur quantifiés.

3. Procédé selon la revendication 1 ou 2, dans lequel les pourcentages sont exprimés par des décimales, leur somme étant égale à un.

4. Procédé selon la revendication 1, 2 ou 3, comportant en outre l'étape consistant à combiner les vecteurs de couleur et le descripteur d'attribut de couleur et à représenter l'image entière à l'aide du résultat de la combinaison.

**5.** Procédé selon l'une quelconque des revendications précédentes, comportant en outre l'étape consistant à exécuter un processus de filtrage prédéterminé pour lisser l'image d'entrée, avant la classification des vecteurs de couleur afin d'obtenir les couleurs dominantes de l'image d'entrée et les pourcentages de celles-ci.

**6.** Procédé selon l'une quelconque des revendications précédentes, comportant en outre l'étape consistant à exécuter un processus de filtrage prédéterminé pour une suppression du bruit de l'image d'entrée, avant la classification des vecteurs de couleur afin d'obtenir les couleurs dominantes de l'image d'entrée et les pourcentages de celles-ci.

**7.** Procédé selon l'une quelconque des revendications précédentes, comportant en outre les étapes consistant à :

analyser la probabilité que des pixels dans l'image d'entrée soient des pixels bruyants et appliquer des pondérations appropriées à ceux-ci, et
appliquer un algorithme de Lloyd général aux vecteurs de couleur, correspondant aux pixels pondérés, pour exécuter une quantification de couleur, avant la classification des vecteurs de couleur afin d'obtenir les couleurs dominantes de l'image d'entrée et les pourcentages de celles-ci.

**8.** Support lisible par ordinateur ayant des codes de programme exécutables par un ordinateur pour mettre en oeuvre un procédé de traitement d'image de couleur conformément à l'une quelconque des revendications précédentes.

**9.** Dispositif de traitement d'image de couleur pour récupérer un descripteur d'attribut de couleur afin de décrire des attributs de couleur d'une image, comportant :

une unité de segmentation pour segmenter une image d'entrée en k régions, k étant un nombre entier positif arbitraire, et délivrer séquentiellement en sortie des données de valeur de pixel correspondant à la k-ième région,
une unité de récupération de vecteur de couleur (302) pour recevoir les données de valeur de pixel et pour récupérer des vecteurs de couleur pour un système de coordonnées de couleur prédéterminé, et
une unité de génération de descripteur d'attribut de couleur (304) pour obtenir le pourcentage de couleurs dominantes représentées par les vecteurs de couleur lorsque les vecteurs de couleur sont tous reçus et générer et délivrer en sortie des données de descripteur d'attribut de couleur contenant les informations sur les couleurs dominantes et les pourcentages de celles-ci.

**10.** Dispositif selon la revendication 9, comportant en outre une unité de combinaison (306) pour combiner des données de valeur de pixel et des données de descripteur d'attribut de couleur afin de délivrer en sortie une image traitée.

**11.** Dispositif selon la revendication 9 ou 10, comportant en outre une unité de combinaison pour combiner des données de valeur de pixel correspondant à la k-ième région et des données de descripteur d'attribut de couleur de la région correspondante, eu égard à l'ensemble des k régions segmentées, afin de délivrer en sortie une image traitée.

**12.** Dispositif selon la revendication 9, 10 ou 11, comportant en outre une unité de quantification pour exécuter une quantification de couleur dans les régions segmentées.

**13.** Dispositif selon la revendication 12, dans lequel l'unité de quantification analyse la probabilité que des pixels de l'image filtrée soient des pixels bruyants et applique des pondérations appropriées à ceux-ci, et applique un algorithme de Lloyd général aux vecteurs de couleur correspondant aux pixels pondérés pour exécuter une quantification de couleur.

**14.** Dispositif selon l'une quelconque des revendications 9 à 13, comportant en outre une unité de filtrage pour exécuter un processus de filtrage prédéterminé afin de lisser l'image d'entrée.

**15.** Dispositif selon l'une quelconque des revendications 9 à 14, comportant en outre une unité de filtrage pour exécuter un processus de filtrage prédéterminé afin de supprimer du bruit de l'image d'entrée.

# FIG. 1

# FIG. 2

## FIG. 3

# FIG. 4A

# FIG. 4B